# EUROPÄISCHE PATENTSCHRIFT

(11) **EP 3 172 102 B1**
(45) Veröffentlichungstag und Bekanntmachung des Hinweises auf die Patenterteilung: **11.07.2018**
(21) Anmeldenummer: 15725993.8
(22) Anmeldetag: 22.05.2015
(51) Int. Cl.: B60T 15/04

(54) **PNEUMATISCHES REGELVENTIL**
PNEUMATIC CONTROL VALVE
SOUPAPE DE COMMANDE PNEUMATIQUE

(30) Priorität: 24.07.2014 DE 102014010955
(43) Veröffentlichungstag der Anmeldung: 31.05.2017
(73) Patentinhaber: WABCO GmbH, 30453 Hannover (DE)
(72) Erfinder: ELZE, Petra, 30455 Hannover (DE); MARTINI, Gerhard, 30989 Gehrden (DE); SCHNIGGENFITTICH, Manfred, 30457 Hannover (DE)
(74) Vertreter: Lauerwald, Jörg
(86) Internationale Anmeldenummer: PCT/EP2015/001046
(87) Internationale Veröffentlichungsnummer: WO 2016/012063

(56) Entgegenhaltungen:
- DE-A1- 4 140 750
- GB-A- 2 181 803
- US-A- 4 691 968

## Beschreibung

Die Erfindung betrifft ein pneumatisches Regelventil, beispielsweise Zwei-Kreis-Bremswertgeber in einem Druckluftbremssystem eines Fahrzeugs zum Ausregeln eines einer gewünschten Bremswirkung entsprechenden Bremsdrucks, aufweisend ein in einem Gehäuseoberteil angeordnetes erstes Ventilsystem mit einem pedalbetätigbaren oder elektrisch betätigbaren ersten Ventilkolben und mit einem damit zusammenwirkenden ersten ringförmigen Plattenventil, sowie ein in einem Gehäuseunterteil angeordnetes zweites Ventilsystem mit einem koaxial angeordneten, pneumatisch und/oder mechanisch durch das erste Ventilsystem betätigbaren zweiten Ventilkolben und mit einem damit zusammenwirkenden zweiten ringförmigen Plattenventil, wobei das Gehäuseoberteil einen ersten, von einer vom Gehäuseunterteil abgewandten Seite zugänglichen zylindrischen Aufnahmeraum für den ersten Ventilkolben und einen zweiten, von einer dem Gehäuseunterteil zugewandten Seite zugänglichen Aufnahmeraum für das erste Plattenventil aufweist, und bei dem das Gehäuseunterteil einen ersten, von einer dem Gehäuseoberteil zugewandten Seite zugänglichen Aufnahmeraum für den zweiten Ventilkolben und einen zweite Aufnahmeraum für das zweite Plattenventil aufweist.

Ein derartiges Regelventil ist in der GB 2 181 803 A offenbart. Bei diesem Regelventil ist der erste Steuerkolben mittels eines Sicherungsringes im Gehäuseoberteil gesichert, und in dem ersten Ventilkolben ist ein druckfederbeaufschlagter Stößelkolben angeordnet, der in dem Ventilkolben ebenfalls mittels eines Sicherungsringes gesichert ist. Des Weiteren ist das druckfederbeaufschlagte Plattenventil mit seinen Einzelelementen in der zweiten Aufnahme des Gehäuseoberteils ebenfalls mittels eines Sicherungsringes gesichert, und schließlich ist das zweite Plattenventil mit seinen Bauelementen in eine Aufnahme eingesetzt, die von der dem Gehäuseoberteil abgewandten Seite des Gehäuseunterteils aus zugänglich ist und ist dort ebenfalls mit einem Sicherungsring gesichert. Zwischen dem ersten Ventilkolben und einem gehäusefesten, ringförmigen Dichtsitz ist eine Prallplatte angeordnet, die wiederum mittels eines Sicherungsrings in Position gehalten wird. Eine ähnliche Prallplatte ist zwischen dem zweiten Steuerkolben und einem zweiten, gehäusefesten, ringförmigen Dichtsitz angeordnet und mittels Schrauben in ihrer Lage gesichert. Das Gehäuseoberteil und das Gehäuseunterteil sind mit einer Mehrzahl koaxialer Aufnahmeräume sowie Bohrungen mit unterschiedlichen und abgestuften Durchmessern versehen, die bei der Herstellung des Regelventils alle mechanisch bearbeitet werden müssen, ebenso wie die Nuten für die verschiedenen Sicherungsringe. Dieses bekannte Regelventil ist dementsprechend kostspielig in der Herstellung und mit Montageschwierigkeiten verbunden, da sich insbesondere die große Anzahl an Sicherungsringen nur mit Spezialwerkzeugen einsetzen lassen.

Vor diesem Hintergrund liegt der Erfindung die Aufgabe zugrunde, ein Regelventil, beispielsweise einen Zwei-Kreis-Bremswertgeber in einem Druckluftbremssystem eines Fahrzeugs der eingangs erwähnten Art vorzuschlagen, das im Vergleich zu herkömmlichen Regelventilen einen verringerten Bauraum benötigt, mit einer geringeren Bauteilanzahl auskommt, zu einer vereinfachten Montage mit Verzicht Vermeidung kritischer Montageprozesse führt, und das sich wenigstens teilweise aus MetallDruckgussteilen und/oder Kunststoff-Spritzgussteilen herstellen lässt.

Gelöst wird diese Aufgabe mit einem pneumatischen Regelventil, beispielsweise Zwei-Kreis-Bremswertgeber in einem Druckluftbremssystem eines Fahrzeugs zum Ausregeln eines einer gewünschten Bremswirkung entsprechenden Bremsdrucks, aufweisend ein in einem Gehäuseoberteil angeordnetes erstes Ventilsystem mit einem pedalbetätigbaren oder elektrisch betätigbaren ersten Ventilkolben und mit einem damit zusammenwirkenden ersten ringförmigen Plattenventil, sowie ein in einem Gehäuseunterteil angeordnetes zweites Ventilsystem mit einem koaxial angeordneten, pneumatisch und/oder mechanisch durch das erste Ventilsystem betätigbaren zweiten Ventilkolben und mit einem damit zusammenwirkenden zweiten ringförmigen Plattenventil, wobei das Gehäuseoberteil einen ersten, von einer vom Gehäuseunterteil abgewandten Seite zugänglichen zylindrischen Aufnahmeraum für den ersten Ventilkolben und einen zweiten, von einer dem Gehäuseunterteil zugewandten Seite zugänglichen Aufnahmeraum für das erste Plattenventil aufweist, und bei dem das Gehäuseunterteil einen ersten, von einer dem Gehäuseoberteil zugewandten Seite zugänglichen Aufnahmeraum für den zweiten Ventilkolben und einen zweite Aufnahmeraum für das zweite Plattenventil aufweist. Zur Lösung der gestellten Aufgabe ist bei diesem Regelventil vorgesehen, dass das erste Plattenventil axial verschiebbar und abgedichtet auf einem in das Gehäuseunterteil einsetzbaren Träger angeordnet ist, welcher auch den Aufnahmeraum für den zweiten Ventilkolben umfasst, und dass das zweite Plattenventil axial verschiebbar und abgedichtet auf einem in die zweite, von der dem Gehäuseoberteil zugewandten Seite zugänglichen Aufnahmeraum einsetzbaren Entlüftungsstück mit einem aus dem Gehäuseunterteil herausgeführten Entlüftungsdurchlass angeordnet ist.

Gemäß einer vorteilhaften Ausführungsform ist vorgesehen, dass das erwähnte Einsatzteil in den ersten Aufnahmeraum und in den zweiten Aufnahmeraum des Gehäuseunterteils eingesetzt ist, welches einen unverschiebbaren, ringförmigen, mit einer radialen Dichtfläche des zweiten Plattenventils zusammenwirkenden Dichtsitz aufweist. Dieser Dichtsitz ist somit nicht materialeinheitlich und einstückig mit dem Gehäuseunterteil gefertigt, wie es beim Stand der Technik der Fall ist, sondern er ist Bestandteil des Einsatzteils, welches sich von der dem Gehäuseoberteil zugewandten Seite des Gehäuseunterteils in die Aufnahme für den zweiten Ventilkolben einsetzen lässt. Auf diese Weise lassen sich das Einsatzteil, das Entlüftungsstück und das zweite Plattenventil als vormontierte Baueinheit in das Gehäuseunterteil einsetzen.

Auch der Träger mit dem ersten Plattenventil und dem zweiten Ventilkolbenträger lassen sich als vormontierte Baueinheit in das Gehäuseoberteil einsetzen. So kann vorgesehen sein, dass das Einsatzteil, das Entlüftungsstück und das zweite Plattenventil zu einer vormontierbaren Baueinheit zusammenbaubar ausgebildet und zusammen in das Gehäuseunterteil einsetzbar sind.

Weiter kann vorgesehen sein, dass der Träger mit dem ersten Plattenventil und dem zweiten Ventilkolben zu einer vormontierbaren Baueinheit zusammenbaubar ausgebildet und zusammen in das Gehäuseoberteil einsetzbar sind.

Gemäß einer weiteren Ausführungsform kann vorgesehen sein, dass das Einsatzteil, das Entlüftungsstück mit dem darauf angeordneten zweiten Plattenventil und der Träger mit dem darauf angeordneten ersten Plattenventil und dem darin eingesetzten, zweiten Ventilkolben zu einer vormontierbaren Baueinheit zusammenbaubar und zusammen in das Gehäuseunterteil und das Gehäuseoberteil einsetzbar ausgebildet sind.

Das Einsatzteil und das Entlüftungsstück oder das Einsatzteil, das Entlüftungsstück und der Träger können mittels einer Rastverbindung oder eine Klemmverbindung zusammengefügt sein, um als vormontierte Baueinheit handhabbar zu sein.

Des Weiteren kann vorgesehen sein, dass der erste Ventilkolben, ein Stößelkolben, ein zwischen dem Stößelkolben und dem ersten Ventilkolben angeordnetes Federelement, eine Druckplatte und ein Führungsring zu einer vormontierbaren Baueinheit zusammenbaubar und zusammen in den Aufnahmeraum des Gehäuseoberteils einsetzbar ausgebildet sind.

Dabei kann der Führungsring mit dem ersten Ventilkolben mittels einer Rastverbindung zusammengefügt sein. Weiter kann ein radialer Umfangsbord am Führungsring die Druckplatte übergreifen und so die vormontierte Baueinheit aus dem ersten Ventilkolben, dem Stößelkolben, dem zwischen dem Stößelkolben und dem ersten Ventilkolben angeordneten Federelement, der Druckplatte und dem Führungsring bilden, welche zur Ventilmontage gemeinsam handhabbar ist und keine besonderen Montagewerkzeuge erfordert. Der einzige Sicherungsring, der in dem erfindungsgemäßen Regelventil verwendet wird, ist im Gehäuseoberteil so angeordnet, dass dieser die vormontierte Baueinheit bestehend aus dem ersten Ventilkolben, dem Stößelkolben, dem Federelement, der Druckplatte und dem Führungsring in der Aufnahme des Gehäuseoberteils fixiert.

Die vorerwähnte Aufgabe wird ferner durch ein Fahrzeug, beispielsweise einem Nutzfahrzeug oder einem Personenfahrzeug gelöst, welches durch ein Regelventil der vorstehend definierten Art gekennzeichnet ist. Des Weiteren wird die Aufgabe auch durch die Verwendung des erfindungsgemäßen Regelventils in einem Druckluftbremssystem eines Fahrzeugs gelöst.

Die Erfindung wird nachstehend anhand eines in der Zeichnung dargestellten Ausführungsbeispiels weiter erläutert. In der Zeichnung zeigt
Fig. 1 eine schematische Längsschnittdarstellung des erfindungsgemäßen Regelventils,
Fig. 2 eine perspektivische Ansicht des ersten Ventilkolbens des Regelventils gemäß Fig. 1,
Fig. 3 eine perspektivische Ansicht des mit dem ersten Ventilkolben gemäß Fig. 2 verbindbaren Führungsrings,
Fig. 4 eine perspektivische Ansicht des in das Gehäuseunterteil des Regelventils gemäß Fig. 1 einsetzbaren Einsatzteils, und
Fig. 5 eine perspektivische Ansicht eines mit dem Einsatzteil gemäß Fig. 4 verbindbaren Entlüftungsstücks.

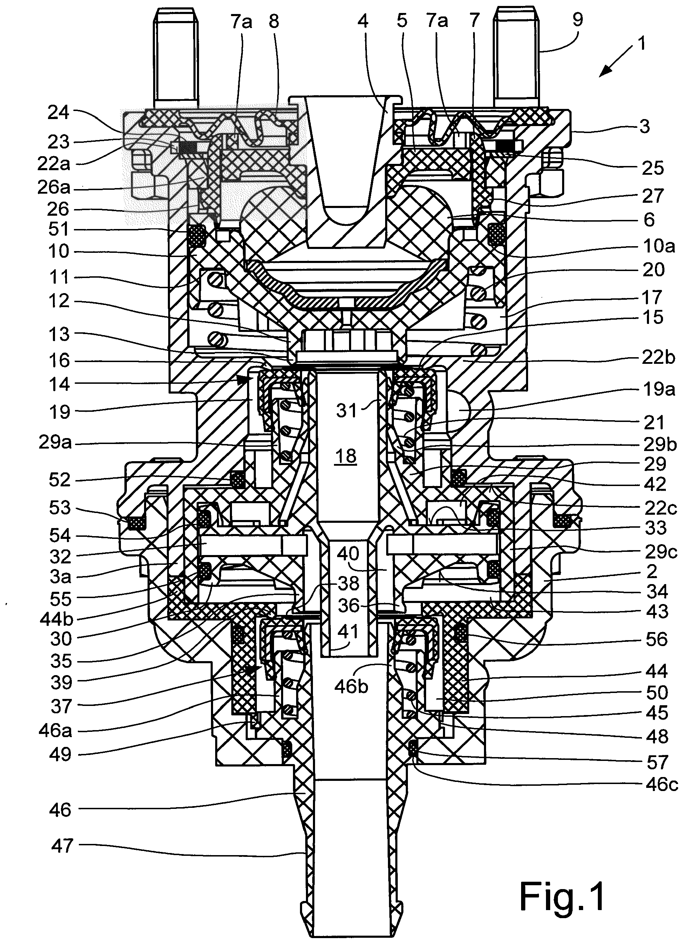

Das in Fig. 1 dargestellte pneumatische Regelventil 1 stimmt hinsichtlich seiner Funktionsweise im Wesentlichen mit der Funktionsweise des in der GB 2 181 803 A beschriebenen Regelventils überein, welche zur vorliegenden Erfindung gehört und daher im Einzelnen nicht beschrieben wird. Ein ähnliches Regelventil ist auch in der DE 33 43 172 C2 offenbart, und die aus diesen beiden Druckschriften entnehmbare Funktionsweise des in Fig. 1 dargestellten Regelventils 1 lässt sich aus diesen beiden Druckschriften entnehmen, deren diesbezüglicher Inhalt hier vollständig zum Gegenstand der Offenbarung gemacht ist.

Das Regelventil 1 weist ein aus einem Gehäuseunterteil 2 und einem Gehäuseoberteil 3 bestehendes Gehäuse auf, die unter Zwischenlage von zwei Dichtringe 52, 53 abgedichtet zusammengefügt sind. Das in Fig. 1 dargestellte Ausführungsbeispiel zeigt ein als Kunststoff-Spritzgussteil ausgebildetes Gehäuseunterteil 2 und ein als Metall-Druckgussteil ausgebildetes Gehäuseoberteil 3.

Ein Raum 17 im Gehäuseoberteil 3 dient als Aufnahme für eine vormontierte Baueinheit, bestehend aus einem Stößelkolben 4, einer Druckplatte 5, einem als Gummifeder zwischen der Druckplatte 5 und einem ersten Ventilkolben 10 angeordneten Federelement 6 sowie einem Führungsring 7. Der Stößelkolben 4 durchdringt axial einen Faltenbalg 8, der radial außen an dem Gehäuseoberteil 3 befestigt ist. Das Gehäuseoberteil 3 und mit diesem das gesamt Regelventil 1 sind mittels Schrauben 9 an einem Gehäuse einer nicht dargestellten Druckluftversorgungseinrichtung befestigbar. An der radial inneren Mantelfläche des Führungsrings 7 ist die Druckplatte 5 axial verschiebbar geführt. Der erste Ventilkolben 10 ist in dem ersten Raum 17 des Gehäuseoberteils 3 mittels eines in einer Ringnut 10a des ersten Ventilkolbens 10 angeordneten Dichtrings 51 abgedichtet geführt.

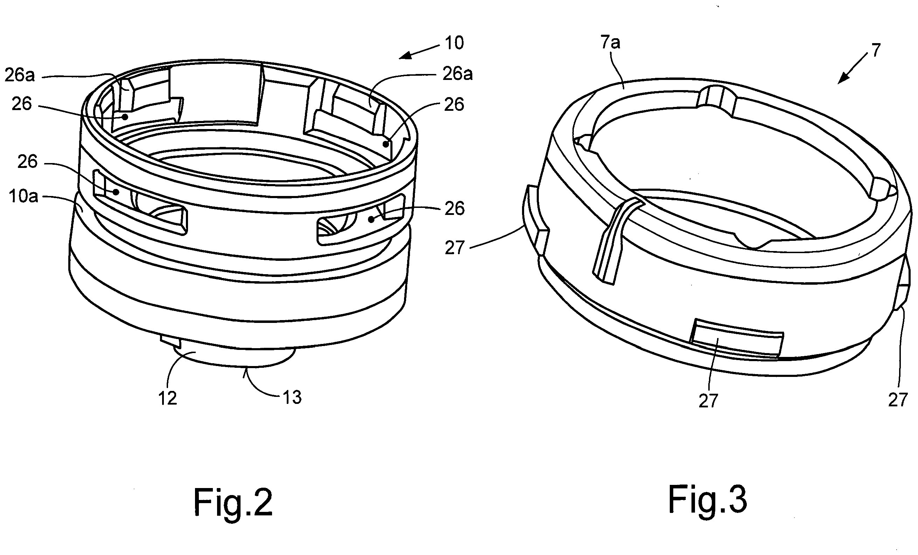

Wie insbesondere die Figuren 2 und 3 verdeutlichen, weist der erste Ventilkolben 10 radial außen mehrere radiale Öffnungen 26 und an seinem Innenumfang mehrere Vorsprünge 26a auf. Diese dienen zur Aufnahme von nach radial außen vorstehenden Vorsprüngen 27 am Führungsring 7, welche zusammen eine Bajonettverschlussverbindung zwischen dem Führungsring 7 und dem ersten Ventilkolben 10 bilden. Der Führungsring 7 ist mit einem bereichsweise unterbrochenen, radial nach innen ragenden Umfangsbord 7a versehen, der im vormontierten Zustand der Baueinheit die Druckplatte 5 axial und radial übergreift. Beim Zusammenfügen der Baueinheit aus dem Stößelkolben 4, der Druckplatte 5, dem Federelement 6, dem Führungsring 7 und dem ersten Ventilkolben 10 wird das Federelement 6 so weit, wie für die Funktion des Regelventils 1 notwendig, vorgespannt.

Diese vormontierte Baueinheit wird nach dem Einsetzen einer Gegendruckfeder 20 in den Raum 17 des Gehäuseoberteils 3 eingeführt und mittels eines in eine Nut 23 im Gehäuseoberteil 3 einsetzbaren Sicherungsrings 24 unter Zwischenlage eines auf einen oberen Gehäuseabsatz 22a aufliegenden Stützrings 25 befestigt.

Die bereits erwähnte Gegendruckfeder 20 stützt sich einerseits an einem unteren Gehäuseabsatz 22b im Raum 17 des Gehäuseoberteils 3 und andererseits an der stützkolbenfernen Unterseite 11 des ersten Ventilkolbens 10 ab. Der Raum 17 des Gehäuseoberteils 3 steht über einen nicht dargestellten Auslass mit einem ersten Kreis eines Zwei-Kreis-Druckluftbremssystems eines Fahrzeugs in Verbindung.

Der untere Gehäuseabsatz 22b im Gehäuseoberteil 3 geht in einen ersten, unverschiebbaren, ringförmigen Dichtsitz 16 über, der mit einer radialen Dichtfläche 15 eines ersten, ringförmigen Plattenventils 14 zusammenwirkt.

Am ersten Ventilkolben 10 ist ein axial ausgerichteter hohlzylindrischer Fortsatz 12 ausgebildet, der in einem ringförmigen Dichtsitz 13 endet. Dieser ringförmige Dichtsitz 13 weist einen kleineren Durchmesser auf als der gehäusefeste ringförmige Dichtsitz 16 und wirkt ebenfalls mit der radialen Dichtfläche 15 des ersten, ringförmigen Plattenventils 14 zusammen.

Das erste, ringförmige Plattenventil 14 ist gegen den Druck einer Feder 21 axial verschiebbar und abgedichtet auf einer ersten hohlzylindrischen Führung 29a und einer zweiten hohlzylindrischen, koaxialen Führung 29b, zwischen denen die Druckfeder 21 radial gesehen angeordnet ist, eines Trägers 29 für das erste Plattenventil 14 angeordnet. Dieser Träger 29 weist außerdem radial außen eine hohlzylindrische Erweiterung 29c auf, welche dort als radial äußere axiale Führung für einen zweiten Ventilkolben 30 dient. Schließlich dient der Träger 29 mit der radialen Innenseite seines hohlzylindrischen Fortsatzes 29b zur zusätzlichen, radial inneren Führung eines hohlzylindrischen koaxialen Fortsatzes 31 des zweiten Ventilkolbens 30. Der Träger 29 ist gegenüber dem Gehäuseoberteil 3 mittels des Dichtrings 52 abgedichtet.

Der zweite Ventilkolben 30 weist radial außen zwei Ringnuten auf, in die jeweils ein Dichtring 54, 55 eingesetzt ist, welche an der Innenmantelfläche der hohlzylindrischen Erweiterung 29c des Trägers 29 abdichtend radial anliegen.

Der erste zylindrische Fortsatz 31 und ein zweiter zylindrischer Fortsatz 41 des zweiten Ventilkolbens 30 bilden radial innen zusammen einen Entlüftungsdurchlass 18 für den Raum 17 im Gehäuseoberteil 3. Zwischen dem zweiten zylindrischen Fortsatz 41 und dem scheibenförmig nach radial außen weisenden Abschnitt des zweiten Ventilkolbens 30 ist ein Ringspalt 40 ausgebildet, welcher mit Radialbohrungen 32 in diesem scheibenförmig nach radial außen weisenden Abschnitt des zweiten Ventilkolbens 30 in Verbindung ist.

Ein zwischen dem Gehäuseoberteil 3 und dem Bereich des ersten, ringförmigen Plattenventils 14 gebildeter Ringraum 19 ist über einen Druckeinlass 19a mit einem nicht dargestellten Druckluftbehälter verbunden.

Der Führungszylinder 29c des Trägers 29 liegt mit seiner stößelkolbennahen Seite an einem dem Gehäuseunterteil 2 zugewandten Gehäuseabsatz 22c an. Zwischen dem Gehäuseunterteil 2 und dem Führungszylinder 29c des Trägers 29 ist ein Ringspalt gebildet, den ein zylindrischer Fortsatz 3a des Gehäuseoberteils 3 axial teilweise ausfüllt. Der Rest dieses Ringspalts wird durch einen koaxialen hohlzylindrischen Fortsatz 44b an einem Einsatzteil 44 ausgefüllt, dessen Hauptteil in einen Druckraum 50 des Gehäuseunterteils 2 eingesetzt ist.

Das Einsatzteil 44 ist radial innen mit einem zweiten, unverschiebbaren Dichtsitz 39 versehen, der mit einer radialen Dichtfläche 38 eines zweiten, ringförmigen Plattenventils 37 zusammenwirkt. Dieses zweite, ringförmige Plattenventil 37 ist auf einem hohlzylindrischen Fortsatz 46a sowie einem weiteren hohlzylindrischen, koaxialen Fortsatz 46b an einem Entlüftungsstück 46 axial verschiebbar und abgedichtet in gleicher Weise wie das erste Plattenventil 14 gegen den Druck einer Druckfeder 45 geführt.

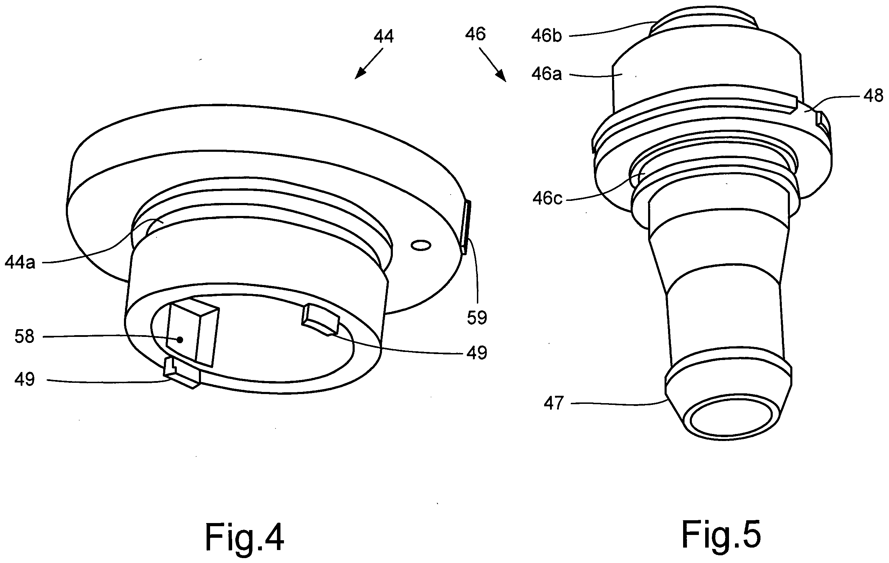

Ein für das erste Ventilsystem, bestehend aus dem ersten Ventilkolben 10 und dem ersten Plattenventil 14, sowie für das zweite Ventilsystem, bestehend aus dem zweiten Ventilkolben 30 und dem zweiten Plattenventil 37, gemeinsamer Entlüftungsdurchlass 47 ist aus dem Gehäuseunterteil 2 axial herausgeführt und gegenüber dem Gehäuseunterteil 2 mittels eines Dichtrings 57 abgedichtet. Dazu ist dieser Dichtring 57 in eine Ringnut 46c des Entlüftungsstücks 46 eingesetzt (Fig. 5).

Zwischen dem zweiten Plattenventil 37 und dem Einsatzteil 44 ist der Druckraum 50 ausgebildet, der über einen nicht dargestellten Druckeinlass mit Druckluft von einem nicht dargestellten Druckluftbehälter beaufschlagt ist. Eine in Fig. 4 am Einsatzteil 44 dargestellte Durchlassöffnung 58 im Einsatzteil 44 lässt sich mittels eines radialen Vorsprungs 59 am Einsatzteil 44 und einer entsprechenden, nicht dargestellten Ausnehmung im Gehäuseunterteil 2 so ausrichten, dass die Durchlassöffnung 58 mit dem nicht dargestellten Druckeinlass zum Druckraum 50 fluchtet, ein Durchlass für Druckluft also gewährleistet ist.

Das Einsatzteil 44 weist an seinem unteren Ende wenigstens zwei axial abstehende Schnapphaken 49 auf, die mit zugeordneten Öffnungen 48 im Entlüftungsstück 46, die in Fig. 5 dargestellt sind, zusammenwirken und eine Rastverbindung ergeben.

Durch den geschilderten Aufbau lassen sich das Einsatzteil 44, das zweite Plattenventil 37 mit der Druckfeder 45 und das Entlüftungsstück 46 als vormontierte Baueinheit zusammenklipsen und in das Gehäuseunterteil 2 einsetzen. Die Abdichtung des Einsatzteils 44 gegenüber dem Gehäuseunterteil 2 erfolgt durch einen in eine Ringnut 44a des Einsatzteils 44 eingesetzten Dichtring 56.

Wenn der Träger 29 für das erste Plattenventil 14 zusätzlich mit dem Einsatzteil 44 vor der Montage im Gehäuseunterteil 2 und dem Gehäuseoberteil 3 zusammengefügt wird, beispielsweise, wie dargestellt, durch Zusammenstecken mit einem Presssitz, oder ebenfalls mittels einer Rastverbindung wie zwischen dem Führungsring 7 und dem ersten Ventilkolben 10 oder zwischen dem Einsatzteil 44 und dem Entlüftungsstück 46, entsteht eine einheitliche, vormontierte und leicht handhabbare Baueinheit, die zunächst in das Gehäuseunterteil 2 eingesetzt wird. Anschließend wird das Gehäuseoberteil 3 mit dem Gehäuseunterteil 2 verbunden, wodurch sich diese vormontierte Baueinheit zwischen dem Gehäuseunterteil 2 und dem Gehäuseoberteil 3 befindet und nach dem Montieren der vormontierten Baueinheit im Gehäuseoberteil 3 zu einem funktionsfähigen Regelventil 1 führt.

Eine zusätzliche Abdichtung ist durch den schon erwähnten Dichtring 53 zwischen dem Gehäuseunterteil 2 und dem Gehäuseoberteil 3 gebildet, so dass an keiner Stelle Druckverluste aus den Regelventil 1 nach außen auftreten, noch Schmutz und Feuchtigkeit von außen nach innen eindringen können.

Ein zwischen dem Einsatzteil 44 und einer Unterseite 34 des zweiten Ventilkolbens 30 gebildeter Raum 43 ist mit einem nicht dargestellten Auslass zu einem zweiten Kreis des Druckluftbremssystems verbunden. Die Zufuhr von Druckluft aus dem Druckraum 50 zum Raum 43 im Gehäuseunterteil 2 wird mittels eines dritten hohlzylindrischen Fortsatzes 35 des zweiten Ventilkolbens 30, der an seinem Ende einen ringförmigen Dichtsitz 36 aufweist, durch die durch das erste Ventilsystem, bestehend aus dem ersten Ventilkolben 10 und dem ersten Plattenventil 14, gesteuerte Bewegung des zweiten Ventilkolbens 30 bewirkt, deren Ausgangsdrücke somit in bekannter Weise voneinander abhängig sind. Hierfür kann ein zwischen dem Träger 29 für das erste Plattenventil 14 und einer stößelkolbennahen Oberseite 33 des zweiten Ventilkolbens 30 gebildeter Raum 42 mit dem Raum 17 zwischen dem ersten Ventilkolben 10 und dem Gehäuseabsatz 22b in nicht dargestellter Weise in Verbindung stehen.

Die kreuzweise schraffierten Elemente des erfindungsgemäßen Regelventils 1 können aus einem thermoplastischen Kunststoff oder einem Elastomer bestehen und lassen sich dementsprechend als Spritzgussteile herstellen, die keiner zusätzlichen, mechanischen Bearbeitung bedürfen. Auch die schräg schraffierten, als Metall-Druckguss-Teile herstellbaren Elemente des erfindungsgemäßen Regelventils 1 bedürfen keiner oder nur einer geringen mechanischen Bearbeitung, so dass sich das vorgestellte Regelventil 1 aus wenigen Teilen kostengünstig herstellen und aufgrund der vormontierbaren Baueinheiten kostengünstig zusammensetzen lässt, wodurch eine bedeutende Kostenersparnis bei der Herstellung des erfindungsgemäßen Regelventils 1 erzielt wird.

### Bezugszeichenliste (Bestandteil der Beschreibung)

- 1: Regelventil
- 2: Gehäuseunterteil
- 3: Gehäuseoberteil
- 3a: Zylindrischer Fortsatz am Gehäuseoberteil
- 4: Stößelkolben
- 5: Druckplatte
- 6: Federelement
- 7: Führungsring
- 7a: Umfangsbord
- 8: Faltenbalg
- 9: Befestigungsschrauben
- 10: Erster Ventilkolben
- 10a: Ringnut für Dichtring am ersten Ventilkolben
- 11: Unterseite des ersten Ventilkolbens 10
- 12: Zylindrischer Fortsatz
- 13: Ringförmiger Dichtsitz
- 14: Erstes, ringförmiges Plattenventil
- 15: Radiale Dichtfläche
- 16: Erster, unverschiebbarer Dichtsitz
- 17: Erster Raum
- 18: Entlüftungsdurchlass
- 19: Zweiter Raum
- 19a: Druckeinlass
- 20: Gegendruckfeder
- 21: Druckfeder
- 22a: Oberer Gehäuseabsatz
- 22b: Unterer Gehäuseabsatz
- 22c: Dritter Gehäuseabsatz
- 23: Nut
- 24: Sicherungsring
- 25: Stützring
- 26: Öffnung
- 26a: Vorsprung
- 27: Vorsprung am Führungsring
- 29: Träger
- 29a: Erster zylindrischer Fortsatz
- 29b: Zweiter, koaxialer zylindrischer Fortsatz
- 29c: Führungszylinder
- 30: Zweiter Ventilkolben
- 31: Erster zylindrischer Fortsatz
- 32: Radialbohrung
- 33: Oberseite des zweiten Ventilkolbens
- 34: Unterseite des zweiten Ventilkolbens
- 35: Dritter zylindrischer Fortsatz
- 36: Ringförmiger Dichtsitz
- 37: Zweites, ringförmiges Plattenventil
- 38: Radiale Dichtfläche
- 39: Zweiter, unverschiebbarer Dichtsitz
- 40: Ringraum
- 41: Zweiter zylindrischer Fortsatz
- 42: Raum oberhalb des zweiten Ventilkolbens
- 43: Raum unterhalb des Ventilkolbens
- 44: Einsatzteil
- 44a: Ringnut
- 44b: Zylindrischer Fortsatz am Einsatzteil
- 45: Druckfeder
- 46: Entlüftungsstück
- 46a: Zylindrischer Fortsatz
- 46b: Koaxialer zylindrischer Fortsatz
- 46c: Ringnut
- 47: Gemeinsamer Entlüftungsdurchlass
- 48: Öffnung für Schnapphaken
- 49: Schnapphaken
- 50: Druckraum
- 51 - 57: Dichtringe
- 58: Durchlassöffnung
- 59: Radialvorsprung am Einsatzteil

## Patentansprüche

1. Pneumatisches Regelventil (1), beispielsweise Zwei-Kreis-Bremswertgeber in einem Druckluftbremssystem eines Fahrzeugs zum Ausregeln eines einer gewünschten Bremswirkung entsprechenden Bremsdrucks, aufweisend ein in einem Gehäuseoberteil (3) angeordnetes erstes Ventilsystem (10, 14) mit einem pedalbetätigbaren oder elektrisch betätigbaren ersten Ventilkolben (10) und mit einem damit zusammenwirkenden ersten ringförmigen Plattenventil (14), sowie ein in einem Gehäuseunterteil (2) angeordnetes zweites Ventilsystem (30, 37) mit einem koaxial angeordneten, pneumatisch und/oder mechanisch durch das erste Ventilsystem (10, 14) betätigbaren zweiten Ventilkolben (30) und mit einem damit zusammenwirkenden zweiten ringförmigen Plattenventil (37), wobei das Gehäuseoberteil (3) einen ersten, von einer vom Gehäuseunterteil (2) abgewandten Seite zugänglichen zylindrischen Aufnahmeraum (17) für den ersten Ventilkolben (10) und einen zweiten, von einer dem Gehäuseunterteil (2) zugewandten Seite zugänglichen Aufnahmeraum (19) für das erste Plattenventil (14) aufweist, und bei dem das Gehäuseunterteil (2) einen ersten, von einer dem Gehäuseoberteil (3) zugewandten Seite zugänglichen Aufnahmeraum (42, 43) für den zweiten Ventilkolben (30) und einen zweite Aufnahmeraum (50) für das zweite Plattenventil (37) aufweist, **dadurch gekennzeichnet, dass** das erste Plattenventil (14) axial verschiebbar und abgedichtet auf einem in das Gehäuseunterteil (2) einsetzbaren Träger (29) angeordnet ist, welcher auch den Aufnahmeraum (42, 43) für den zweiten Ventilkolben (30) umfasst, und dass das zweite Plattenventil (37) axial verschiebbar und abgedichtet auf einem in die zweite, von der dem Gehäuseoberteil (3) zugewandten Seite zugänglichen Aufnahmeraum (50) einsetzbaren Entlüftungsstück (46) mit einem aus dem Gehäuseunterteil (2) herausgeführten Entlüftungsdurchlass (47) angeordnet ist.

2. Regelventil nach Anspruch 1, **dadurch gekennzeichnet, dass** ein Einsatzteil (44) in den ersten Aufnahmeraum (42, 43) und in den zweiten Aufnahmeraum (50) des Gehäuseunterteils (2) eingesetzt ist, das einen unverschiebbaren, ringförmigen, mit einer radialen Dichtfläche (38) des zweiten Plattenventils (37) zusammenwirkenden Dichtsitz (39) aufweist.

3. Regelventil nach Anspruch 2, **dadurch gekennzeichnet, dass** das Einsatzteil (44), das Entlüftungsstück (46) und das zweite Plattenventil (37) zu einer vormontierbaren Baueinheit (44, 46, 37) zusammenbaubar und zusammen in das Gehäuseunterteil (2) einsetzbar ausgebildet sind.

4. Regelventil nach Anspruch 3, **dadurch gekennzeichnet, dass** der Träger (29) mit dem ersten Plattenventil (14) und dem zweiten Ventilkolben (30) zu einer vormontierbaren Baueinheit (29, 14, 30) zusammenbaubar und zusammen in das Gehäuseoberteil (3) einsetzbar ausgebildet sind.

5. Regelventil nach Anspruch 2, **dadurch gekennzeichnet, dass** das Einsatzteil (44), das Entlüftungsstück (46) mit dem darauf angeordneten zweiten Plattenventil (37) und der Träger (29) mit dem darauf angeordneten ersten Plattenventil (14) und dem darin eingesetzten, zweiten Ventilkolben (30) zu einer vormontierbaren Baueinheit (44, 46, 37, 29, 14, 30) zusammenbaubar und zusammen in das Gehäuseunterteil (2) und das Gehäuseoberteil (3) einsetzbar ausgebildet sind.

6. Regelventil nach Anspruch 3 oder 5, **dadurch gekennzeichnet, dass** das Einsatzteil (44) und das Entlüftungsstück (46) mittels einer Rastverbindung (48, 49) oder einer Klemmverbindung zusammengefügt sind.

7. Regelventil nach Anspruch 3 oder 5, **dadurch gekennzeichnet, dass** das Einsatzteil (44), das Entlüftungsstück (46) und der Träger (29) mittels einer Rastverbindung (48, 49) oder einer Klemmverbindung zusammengefügt sind.

8. Regelventil nach einem der Ansprüche 2 bis 7, **dadurch gekennzeichnet, dass** der erste Ventilkolben (10), ein Stößelkolben (4), ein zwischen dem Stößelkolben (4) und dem ersten Ventilkolben (10) angeordnetes Federelement (6), eine Druckplatte (5) und ein Führungsring (7) zu einer vormontierbaren Baueinheit (10, 4, 6, 5, 7) zusammenbaubar und zusammen in die Aufnahmeraum (17) des Gehäuseoberteils (3) einsetzbar ausgebildet sind.

9. Regelventil nach Anspruch 8, **dadurch gekennzeichnet, dass** der Führungsring (7) mit dem ersten Ventilkolben (10) mittels einer Rastverbindung (26, 27) zusammengefügt ist, und dass ein radialer Umfangsbord (7a) am Führungsring (7) die Druckplatte (5) radial übergreift.

10. Regelventil nach Anspruch 8 oder 9, **dadurch gekennzeichnet, dass** die vormontierte Baueinheit (10, 4, 6, 5, 7) aus dem ersten Ventilkolben (10), dem Stößelkolben (4), dem Federelement (6), der Druckplatte (5) und dem Führungsring (7) in der Aufnahme (Raum 17) des Gehäuseoberteils (3) mittels eines Sicherungsrings (24) fixiert ist.

11. Fahrzeug, nämlich Nutzfahrzeug oder Personenfahrzeug, **gekennzeichnet durch** ein Regelventil (1) gemäß einem der Ansprüche 1 bis 10.

12. Verwendung eines Regelventils (1) gemäß einem der Ansprüche 1 bis 10 in einem Druckluftbremssystem eines Fahrzeugs.

## Claims

1. Pneumatic control valve (1), for example dual-circuit brake transducer in a compressed air brake system of a vehicle for adjusting a brake pressure which corresponds to a desired brake action, having a first valve system (10, 14) which is arranged in a housing upper part (3) with a first valve piston (10) which can be actuated by pedal or electrically and with a first annular plate valve (14) which interacts with the said first valve piston (10), and a second valve system (30, 37) which is arranged in a housing lower part (2) with a coaxially arranged second valve piston (30) which can be actuated pneumatically and/or mechanically by way of the first valve system (10, 14) and with a second annular plate valve (37) which interacts with the said second valve piston (30), the housing upper part (3) having a first cylindrical receiving space (17) for the first valve piston (10), which receiving space (17) is accessible from a side which faces away from the housing lower part (2), and a second receiving space (19) for the first plate valve (14), which receiving space (19) is accessible from a side which faces the housing lower part (2), and in which pneumatic control valve (1) the housing lower part (2) has a first receiving space (42, 43) for the second valve piston (30), which receiving space (42, 43) is accessible from a side which faces the housing upper part (3), and a second receiving space (50) for the second plate valve (37), **characterized in that** the first plate valve (14) is arranged in an axially displaceable and sealed manner on a support (29) which can be inserted into the housing lower part (2) and also comprises the receiving space (42, 43) for the second valve piston (30), and **in that** the second plate valve (37) is arranged in an axially displaceable and sealed manner on a venting piece (46) which can be inserted into the second receiving space (50) which is accessible from the side which faces the housing upper part (3), with a venting passage (47) which is routed out of the housing lower part (2).

2. Control valve according to Claim 1, **characterized in that** an insert part (44) is inserted into the first receiving space (42, 43) and into the second receiving space (50) of the housing lower part (2), which insert part (44) has a non-displaceable, annular sealing seat (39) which interacts with a radial sealing face (38) of the second plate valve (37).

3. Control valve according to Claim 2, **characterized in that** the insert part (44), the venting piece (46) and the second plate valve (37) can be combined to form a structural unit (44, 46, 37) which can be preassembled, and are configured such that they can be inserted together into the housing lower part (2).

4. Control valve according to Claim 3, **characterized in that** the support (29) can be combined with the first plate valve (14) and the second valve piston (30) to form a structural unit (29, 14, 30) which can be preassembled, and they are configured such that they can be inserted together into the housing upper part (3) .

5. Control valve according to Claim 2, **characterized in that** the insert part (44), the venting piece (46) with the second plate valve (37) which is arranged thereon, and the support (29) with the first plate valve (14) which is arranged thereon and with the second valve piston (30) which is inserted into it are configured such that they can be combined to form a structural unit (44, 46, 37, 29, 14, 30) which can be preassembled, and such that they can be inserted together into the housing lower part (2) and the housing upper part (3).

6. Control valve according to Claim 3 or 5, **characterized in that** the insert part (44) and the venting piece (46) are joined together by means of a latching connection (48, 49) or a clamping connection.

7. Control valve according to Claim 3 or 5, **characterized in that** the insert part (44), the venting piece (46) and the support (29) are joined together by means of a latching connection (48, 49) or a clamping connection.

8. Control valve according to one of Claims 2 to 7, **characterized in that** the first valve piston (10), a plunger piston (4), a spring element (6) which is arranged between the plunger piston (4) and the first valve piston (10), a pressure plate (5) and a guide ring (7) are configured such that they can be combined to form a structural unit (10, 4, 6, 5, 7) which can be preassembled, and such that they can be inserted together into the receiving space (17) of the housing upper part (3).

9. Control valve according to Claim 8, **characterized in that** the guide ring (7) is joined together with the first valve piston (10) by means of a latching connection (26, 27), and **in that** a radial circumferential rim (7a) on the guide ring (7) engages radially over the pressure plate (5).

10. Control valve according to Claim 8 or 9, **characterized in that** the preassembled structural unit (10, 4, 6, 5, 7) comprising the first valve piston (10), the plunger piston (4), the spring element (6), the pressure plate (5) and the guide ring (7) is fixed in the receiving space (17) of the housing upper part (3) by means of a securing ring (24).

11. Vehicle, namely commercial vehicle or passenger vehicle, **characterized by** a control valve (1) according to one of Claims 1 to 10.

12. Use of a control valve (1) according to one of Claims 1 to 10 in a compressed air brake system of a vehicle.

## Revendications

1. Soupape de régulation pneumatique (1), par exemple transducteur de valeurs de freinage à deux circuits, dans un système de freinage pneumatique sous pression d'un véhicule, pour la régulation d'une pression de freinage correspondant à une action de freinage souhaitée, présentant un premier système de soupape (10, 14) disposé dans une partie supérieure du boîtier (3), avec un premier piston de soupape (10) pouvant être actionné par une pédale ou pouvant être actionné électriquement et avec une première soupape à plaque annulaire (14) coopérant avec celui-ci, et un deuxième système de soupape (30, 37) disposé dans une partie inférieure du boîtier (2) avec un deuxième piston de soupape (30) disposé coaxialement, pouvant être actionné pneumatiquement et/ou mécaniquement par le premier système de soupape (10, 14) et avec une deuxième soupape à plaque annulaire (37) coopérant avec celui-ci, la partie supérieure du boîtier (3) présentant un premier espace de réception cylindrique (17) accessible depuis un côté opposé à la partie inférieure du boîtier (2) pour le premier piston de soupape (10) et un deuxième espace de réception (19) accessible depuis un côté tourné vers la partie inférieure du boîtier (2) pour la première soupape à plaque (14), et la partie inférieure de boîtier (2) présentant un premier espace de réception (42, 43) pour le deuxième piston de soupape (30), accessible depuis un côté tourné vers la partie supérieure du boîtier (3) et un deuxième espace de réception (50) pour la deuxième soupape à plaque (37), **caractérisée en ce que** la première soupape à plaques (14) est disposée de manière déplaçable axialement et de manière étanchéifiée sur un support (29) pouvant être inséré dans la partie inférieure du boîtier (2), lequel comprend également l'espace de réception (42, 43) pour le deuxième piston de soupape (30), et **en ce que** la deuxième soupape à plaque (37) est disposée de manière déplaçable axialement et de manière étanchéifiée sur une pièce de désaérage (46) pouvant être insérée dans le deuxième espace de réception (50) accessible depuis le côté tourné vers la partie supérieure de boîtier (3), avec un passage de désaérage (47) guidé hors de la partie inférieure de boîtier (2).

2. Soupape de régulation selon la revendication 1, **caractérisé en ce qu'**une partie d'insertion (44) est insérée dans le premier espace de réception (42, 43) et dans le deuxième espace de réception (50) de la partie inférieure du boîtier (2), laquelle présente un siège d'étanchéité (39) non déplaçable, annulaire, coopérant avec une surface d'étanchéité radiale (38) de la deuxième soupape à plaque (37).

3. Soupape de régulation selon la revendication 2, **caractérisée en ce que** la partie d'insertion (44), la pièce de désaérage (46) et la deuxième soupape à plaque (37) sont réalisées de manière à pouvoir être assemblées pour former une unité structurelle prémontable (44, 46, 37) et de manière à pouvoir être insérées ensemble dans la partie inférieure du boîtier (2).

4. Soupape de régulation selon la revendication 3, **caractérisée en ce que** le support (29) avec la première soupape à plaque (14) et le deuxième piston de soupape (30), sont réalisés de manière à pouvoir être assemblés pour former une unité structurelle prémontable (29, 14, 30) de manière à pouvoir être insérés ensemble dans la partie supérieure du boîtier (3).

5. Soupape de régulation selon la revendication 2, **caractérisée en ce que** la partie d'insertion (44), la pièce de désaérage (46) avec la deuxième soupape à plaque (37) disposée sur celle-ci et le support (29) avec la première soupape à plaque (14) disposée sur celui-ci et le deuxième piston de soupape inséré dans celui-ci (30) sont réalisés de manière à pouvoir être assemblés pour former une unité structurelle prémontable (44, 46, 37, 29, 14, 30, et à pouvoir être insérés ensemble dans la partie inférieure du boîtier (2) et dans la partie supérieure du boîtier (3).

6. Soupape de régulation selon la revendication 3 ou 5, **caractérisée en ce que** la partie d'insertion (44) et la pièce de désaérage (46) sont assemblées au moyen d'une connexion par encliquetage (48, 49) ou d'une connexion par serrage.

7. Soupape de régulation selon la revendication 3 ou 5, **caractérisée en ce que** la partie d'insertion (44), la pièce de désaérage (46) et le support (29) sont assemblés au moyen d'une connexion par encliquetage (48, 49) ou d'une connexion par serrage.

8. Soupape de régulation selon l'une quelconque des revendications 2 à 7, **caractérisée en ce que** le premier piston de soupape (10), un piston de poussoir (4), un élément de ressort (6) disposé entre le piston de poussoir (4) et le premier piston de soupape (10), une plaque de pression (5) et une bague de guidage (7) sont réalisés de manière à pouvoir être assemblés pour former une unité structurelle prémontable (10, 4, 6, 5, 7) et de manière à pouvoir être insérés ensemble dans l'espace de réception (17) de la partie supérieure du boîtier (3).

9. Soupape de régulation selon la revendication 8, **caractérisée en ce que** la bague de guidage (7) est assemblée avec le premier piston de soupape (10) au moyen d'une connexion par encliquetage (26, 27), et **en ce qu'**un bord périphérique radial (7a) vient en prise par le dessus radialement avec la plaque de pression (5) au niveau de la bague de guidage (7).

10. Soupape de régulation selon la revendication 8 ou 9, **caractérisée en ce que** l'unité structurelle prémontée (10, 4, 6, 5, 7) constituée du premier piston de soupape (10), du piston de poussoir (4), de l'élément de ressort (6), de la plaque de pression (5) et de la bague de guidage (7) est fixée dans le logement (espace 17) de la partie supérieure du boîtier (3) au moyen d'une bague de fixation (24).

11. Véhicule, à savoir véhicule utilitaire ou véhicule de tourisme, **caractérisé par** une soupape de régulation (1) selon l'une quelconque des revendications 1 à 10.

12. Utilisation d'une soupape de régulation (1) selon l'une quelconque des revendications 1 à 10 dans un système de freinage pneumatique sous pression d'un véhicule.
